# EUROPEAN PATENT APPLICATION

(11) **EP 4 095 118 A1**
(43) Date of publication of application: **30.11.2022**
(21) Application number: 22175946.7
(22) Date of filing: 27.05.2022
(51) Int. Cl.: C05F 3/00, C05F 11/08, C05F 17/20, C05F 17/50

(54) **BIOLOGICAL FERTILIZER PRODUCT AND CORRESPONDING PRODUCTION METHOD**

(30) Priority: 27.05.2021 IT 202100013931
(71) Applicant: Rigenera S.r.l., 04011 Aprilia (LT) (IT)
(72) Inventor: Lonati, Luca Alberto, 04011 Aprilia (LT) (IT)
(74) Representative: Petraz, Gilberto Luigi

(57) **Abstract**

The biological fertilizer product comprises composted organic material that comes only from the bovine supply chain, at least one lactobacillus and a fungi-based biocontrol agent; the biological fertilizer product is obtained through a controlled atmosphere method, with regular movement of the decomposing organic material.

## Description

### FIELD OF THE INVENTION

The present invention concerns a biological fertilizer product and a method to produce it. More in particular, the present invention concerns biological manure or fertilizers, based on biological material, obtained through biological processes.

### BACKGROUND OF THE INVENTION

Manure and other fertilizers have been known for some time, used to enhance the cultivation of various fruit and vegetable products, for example by supplying the agricultural terrain with the nutrients that the cultivated plant needs. The first fertilizers used were obtained chemically and starting from products which were also of synthetic origin. These fertilizers have the disadvantage of being pollutants, due to the chemical processes used to obtain them and, sometimes, are even harmful to human health, because some of their components can be transmitted from plants to people.

It has also been observed that the chemical products are used not to treat the soil itself, but to provide the nutrients necessary for the growth of cultivated plants. The soil is used as a mere support for growth, but it is not treated, which causes its depletion in terms of nutrients for the plants.

In order to resolve the problem of pollution, so-called biological manure and fertilizers have been developed, which are produced through biological processes. The origin of the starting products, however, remains of a non-biological nature, since these are, for example, urea, or urea-based compounds.

Fertilizer products of organic origin have been developed, generically called composted organic soil improvers. These products solve the problem of pollution, since they provide controlled processes for transforming and stabilizing, that is, composting or decomposing, organic waste of various nature.

Composted organic soil improvers are divided into two classes, according to their origin: green composted soil improvers and mixed composted soil improvers.

Green composted soil improvers are obtained from the decomposition of plant residues, in particular originating from the maintenance of ornamental greenery, crop residues or other waste of plant origin, with the exception of algae and other marine plants.

Mixed composted soil improvers are instead obtained from the decomposition of waste of plant and animal origin. Mixed composted soil improvers allow to use materials of different origins, the mixture of which can create the characteristics necessary for a good stabilization and for obtaining a product that really has fertilizing properties.

These organic soil improvers are regulated at EU level, through regulation L 75/2010. In Italy, agricultural mixed composted soil improvers have also been introduced, in which the animal waste used comes exclusively from agricultural farms. Among such animal waste, the most commonly used are those of the pig, sheep and poultry supply chains.

In any case, mixed composted soil improvers have the disadvantage of containing elements that are not suitable for cultivation, which can ultimately be transmitted to the cultivated plants. This problem mainly derives from the excrement of the animals that belong to the supply chains mentioned above, since pigs, sheep and poultry are fed with feed that contains synthetic additives, for example antibiotics or suchlike, and products for washing the stables.

Some examples of mixed composted products comprising excrement of animals from the sheep, poultry and pig supply chain are described in prior documents CN 108990664, which describes in particular a composted product suitable to be used in the blood orange cultivation, and CN 109089709, which describes in particular a composted product suitable to be used in apple cultivation.

Other examples of mixed composted products are described in documents CN 112299901 and AU 2020103965. These antecedents, by the same applicant, describe similar products, obtained by mixing layers of excrement of bovine origin with layers of pre-treated straw. Before being subjected to composting, the straw is boiled for ten minutes in a 25% sodium sulfite solution, and then left to soak for another ten minutes in a 30% sodium hydroxide solution. This pre-treatment of the straw involves solutions of a chemical nature; traces of these compounds can therefore be released to the plants in an undesirable way. In the composted products described in these documents, it is provided to add a bacterial deodorizing agent in order to eliminate or reduce the bad odor.

Another disadvantage of the mixed composted soil improvers of the state of the art is that obtaining them requires prolonged process times. Typically, the production of mixed composted soil improvers takes between 70 and 90 days.

There is therefore the need to perfect a method for producing a biological fertilizer product, as well as a biological fertilizer product, which can overcome at least one of the disadvantages of the state of the art.

In particular, one purpose of the present invention is to provide a biological fertilizer product free from traces of medicines, antibiotics, heavy metals and disinfectant chemical products.

Another purpose of the present invention is to provide a fertilizer product that has a beneficial effect for the soil to be treated and cultivated, capable of giving the plants high nutritional components.

Another purpose is to perfect a method for producing a fertilizer product which, while remaining entirely eco-sustainable, is faster than known methods.

The Applicant has devised, tested and embodied the present invention to overcome the shortcomings of the state of the art and to obtain these and other purposes and advantages.

### SUMMARY OF THE INVENTION

The present invention is set forth and characterized in the independent claims. The dependent claims describe other characteristics of the present invention or variants to the main inventive idea.

In accordance with the above purposes, hereafter we describe a biological fertilizer product and a method to obtain it, which overcome the limits of the state of the art and eliminate the defects present therein.

The idea behind the present invention is to reuse waste, or refuse, of animal origin and transform it into a useful and safe product, through completely eco-sustainable ways.

In accordance with some embodiments, there is provided a biological fertilizer product of the mixed composted soil conditioner type made starting from animal excrement solely from the bovine supply chain.

Compared to the pig and poultry supply chains, the bovine supply chain is much more controlled and regulated from the point of view of nutrition, which is implemented in a way that is as compatible as possible with human nutrition. By using organic waste of animal origin, originating exclusively from the bovine supply chain, a base material is used that is much less loaded with potentially harmful elements, resulting in a much healthier biological fertilizer product than those of the state of the art. In order to guarantee the highest quality of the fertilizer, it is also possible to select bovine refuse, that is, which originates solely from adult animals and without washing water from the milking parlors.

The biological fertilizer product also comprises at least one lactobacillus. The lactobacillus allows to optimize the aerobic fermentation of the organic waste. The lactobacillus can be lactobacillus subtilis.

Advantageously, the fertilizer product also comprises at least one biocontrol agent.

Preferably, the biocontrol agent is of the fungi-based type. More preferably, it is chosen from trichoderma and mycorrhiza, or a mixture thereof.

The biocontrol agent advantageously allows, on the one hand, to protect plants from diseases, and on the other hand to increase the process of absorption of the nutrients present in the soil.

The present invention advantageously makes available a biological fertilizer product comprising exclusively the three base components mentioned above, since it consists of animal excrement solely from the bovine supply chain, a lactobacillus and a biocontrol agent.

Therefore it is of a much simpler composition and cheaper to manufacture than the fertilizer products known in the state of the art, many of which require straw, possibly chemically treated, and/or many other additional components which increase its cost and increase the probability that at least some of such components have harmful effects on plants and/or humans.

Furthermore, the biological fertilizer product of the present invention already integrates the elements that are essential to achieve the advantages described above, without the need for the operator to subsequently add, directly in the field, chemical additives in order to protect plants and/or to promote their growth.

According to one aspect, there is provided a method for producing a biological fertilizer product, preferably of the type described above.

The method provides a step of controlled bio-oxidation and humification, that is, composting, of organic waste that contains only bovine manure.

The method also provides a step of adding at least one lactobacillus to the material being composted. The lactobacillus allows to accelerate the aerobic digestion of the organic waste, thus resulting in shorter times to obtain the biological fertilizer product. With this method, the composting times can be lowered up to about 30 days. The lactobacillus can be lactobacillus subtilis.

The addition of the lactobacillus occurs in an initial phase of the composting, preferably in the first week of composting, more preferably between the second and the fifth day.

In accordance with some embodiments, the method provides to move, with a regular time frequency, the decomposing organic material. Preferably, the movement occurs on a daily basis.

According to some embodiments described here, the method provides an additional step of adding at least one biocontrol agent, the function of which is to protect the plant to be cultivated from parasites, diseases or suchlike.

Favorably, the biocontrol agent is fungi-based. More favorably, it is chosen from trichoderma, mycorrhiza and mixtures thereof.

It is preferable that the biocontrol agent is added after the lactobacilli, more preferably after the first week of decomposition of the organic waste, even more preferably at the end of the second week of decomposition.

In any case, it is preferable to add the biocontrol agent within ten days before the end of the composting step, more preferably between ten and twenty days before the end of the composting step. In this way, there is time for the biocontrol agent to develop in order to be already operational when the composting step ends. The protective effect of the biocontrol agent is therefore immediately effective in the biological fertilizer product thus obtained.

In accordance with some embodiments, the composting step is carried out in a controlled environment, preferably at a temperature comprised between 50°C and 80°C, more preferably between 55°C and 70°C, even more preferably between 58°C and 68°C. By doing so, a so-called long-term pasteurization is carried out.

### DESCRIPTION OF SOME EMBODIMENTS

We will now refer in detail to the possible embodiments of the invention, of which one or more examples are shown in the attached drawings, by way of a non-limiting illustration. The phraseology and terminology used here is also for the purposes of providing non-limiting examples.

The biological fertilizer product according to the invention is produced starting from organic material of animal origin.

The organic material of animal origin is taken only from the bovine supply chain, so as to be less loaded with unwanted elements such as, for example, traces of medicines, antibiotics and/or heavy metals, which can be absorbed by plants.

The material of bovine origin has, in itself, a lower concentration of these unwanted elements compared to the material that comes from the sheep, poultry or pork supply chains, since the bovine supply chain is much more monitored from the point of view of the feed supplied to the cattle. This means that the animals in the bovine supply chain ingest smaller quantities of medicines and other additives.

Advantageously, the biological fertilizer product is made starting from excrements of bovine origin.

The biological fertilizer product also comprises at least one lactobacillus, since the latter is inserted in the bovine excrement during the production of the product, in order to accelerate the transformation thereof and thus shorten the reaction times.

Optionally, but preferably, the fertilizer product can also comprise at least one biocontrol agent, that is, a natural antibiotic, the function of which is to protect the plants to be cultivated from parasites and diseases that can negatively impact the correct growth of the plants.

Preferably, such biocontrol agents are chosen from trichoderma, mycorrhiza or both. The trichoderma can be chosen from *Trichoderma asperellum, Trichoderma harzianum, Trichoderma viride,* and *Trichoderma hamatum.* More preferably, most of the trichoderma is *Trichoderma harzanium.* The mycorrhiza can be chosen from ectomycorrhiza and endomycorrhiza.

The trichoderma act by creating a kind of film around the roots of plants, so as to act as a shield against root diseases.

The mycorrhiza comprise a bacterial flora that helps the roots to absorb and process the nutrients present in the soil, reviving the cation exchange between the soil and the roots of the plant.

According to some embodiments, the biological fertilizer product has a C/N ratio (that is, a ratio between the quantity of carbon and the quantity of nitrogen contained therein) lower than 25, preferably lower than 20, more preferably comprised between 9 and 15. The fertilizer product also has a slightly basic pH, that is, comprised between 7 and 10, preferably between 8 and 9. The salinity of the biological fertilizer product is advantageously low, for example lower than 5, if measured with the M.I. IRSA 2070 method.

Advantageously, the biological fertilizer product also comprises a plurality of pro-vita non-pathogenic bacterial strains. These bacterial strains help regenerate the cultivated soil.

It is noted that the biological fertilizer product has very low levels of undesirable elements, in particular of heavy metals, and in any case all below the limits established by law. Furthermore, no traces of plastic particles were detected under microscope, nor traces of lithoid materials with a diameter of less than 5mm.

According to some embodiments, in addition to the organic material of bovine origin, the biological fertilizer product also comprises straw, for example of durum wheat.

Preferably, the biological fertilizer product is made available packaged in impermeable and hermetically sealed sacks

The embodiments of the biological fertilizer product described above can be obtained by means of the following method.

It is provided to make available a mass comprising, at least in part, preferably in full, organic material of animal origin coming only from the bovine supply chain. More preferably, this organic material of animal origin consists of cattle excrement.

The organic material is disposed in a closed container, for example a silo, preferably provided with an internal movement device configured to move the mass of organic material. This movement device preferably comprises at least one mechanical shovel. Obviously, the mechanical shovel is driven from the outside of the container, by means of known and advantageously programmable mechanisms. It can also be provided, as an alternative or in addition to the mechanical shovel, that the movement of the organic material is done manually, by an operator equipped with suitable tools.

The atmosphere inside the reaction container is preferably controllable, at least as regards humidity and temperature. Advantageously, it is provided to maintain the internal temperature of the container at a constant value throughout the step of composting the organic mass. More advantageously, the inside of the container is heated compared to the external temperature. Even more advantageously, the internal temperature of the container is kept at a value comprised between 50°C and 80°C, even more advantageously between 55°C and 70°C, even more advantageously between 58°C and 68°C.

It is noted that this heat treatment, also called long-term pasteurization, is the basis for eliminating pathogens from the fertilizer product.

The container is then closed, in the presence of oxygen inside it, in order to allow the start of a step of composting the mass of organic material. This composting step is implemented in a known way, that is, through bacteria of the *bacillus subtilis* type already present in the starting mass of organic material.

During this initial period of the composting step, the bacteria involved are allowed to act, possibly moving the organic mass by means of the internal movement device of the silo.

After a first period of composting, at least one lactobacillus is added to the mass of organic material in order to accelerate the aerobic digestion of the mass of organic material. The lactobacillus is preferably chosen from the subtilis family. Advantageously, the lactobacillus is supplied at a concentration of 1kg per 100 tons of fertilizer. In this way, it is possible to shorten the reaction times useful for obtaining the final fertilizer product, from 70-90 days for the known methods, down to about 30 days with the method according to the present invention.

The addition of lactobacillus preferably occurs between the second and the fifth day starting from the beginning of the composting of the mass of organic material, for example on the third or fourth day.

Following the addition of lactobacillus, preferably when the composting is at least in a moderately advanced stage, at least one biocontrol agent is added to the mass of organic material. By moderately advanced stage we mean that at least 30% by weight of the organic material has been composted.

Preferably, the biocontrol agent is fungi-based. More preferably, the biocontrol agent comprises trichoderma, mycorrhiza or both. Trichoderma and mycorrhiza are provided at a concentration of 1kg for every 100 tons of fertilizer.

It is particularly advantageous to provide to add the biocontrol agent ten days before the end of composting at the latest, more preferably even at least ten days after the start of composting. More advantageously, the biocontrol agent is added after fifteen days, and composting continues in the presence thereof for at least fifteen days.

Preferably, the biocontrol agent is added to the organic material at the end of the composting step, regardless of its duration.

In this way, on the one hand, a part of composted organic material has already developed that favors the development, also called replication, of the biocontrol agent. On the other hand, enough time is left to replicate the biocontrol agent, so that it is already active, or almost active, at the end of the composting step.

Thanks to this measure, there is provided a fertilizer product with a biocontrol agent in an advanced state of replication, which allows it to be activated much more rapidly than in the state of the art.

In the case of trichoderma, in the state of the art it takes 7-10 days from when it is applied to the soil before it begins to produce its effect. As mentioned above, the shield effect is obtained after the development of a film that is created during the replication of the fungus. By supplying a fertilizer product containing trichoderma whose replication has already previously begun, the time required for the development of the film of the bacterium mentioned above, and therefore to obtain the protective effect of the roots of the plants, is shortened. With the fertilizer product of the invention, it is possible to have a protective effect of the trichoderma immediately after its application.

In the case of mycorrhiza, in the state of the art it takes 7-10 days, or several treatment cycles, before the symbiotic association between fungus and plant is realized and operational. With a fertilizer product as described above, it is possible to obtain a protective effect of the mycorrhiza already from the first soil treatment cycle.

In essence, in the method according to the invention, the composting step is divided at least into a first composting period, during which the organic material is left to compost "alone", that is, in the presence only of the bacteria already present therein, and a second period during which the composting also occurs in the presence of at least one lactobacillus. The first period has a duration preferably comprised between one day and seven days, more preferably between two and five days.

Obviously, the end of the first period (and therefore the beginning of the second) is marked by the addition of the lactobacillus to the decomposing organic material.

The method according to the invention also provides a third period of the composting step, during which the organic material is composted in the presence, in addition to the lactobacillus, also of at least one biocontrol agent.

Preferably, the second period has a duration comprised between five days and fourteen days, more preferably between eight and eleven days. Preferably, the second period ends after a time ranging from ten to twenty days from the beginning of the composting step, more preferably after a period of time ranging from thirteen to seventeen days.

The third period, on the other hand, has a duration preferably greater than ten days. In accordance with some embodiments, the third period has a duration substantially equal to the duration of the first and second periods considered together. However, it is possible to provide that the duration of the third period is different from the sum of the durations of the first and second periods.

It can be surmised that the end of the second period, and therefore the beginning of the third period, is marked by the addition of the biocontrol agent.

We must reiterate that, preferably, the temperature at which the composting of the organic material is carried out is kept constant throughout the entire composting step. Alternatively or in addition, it is also preferable to move the mass of organic material regularly during the same composting step. For example, the organic material can be moved every day, even several times a day. It is also possible to provide to move the organic material continuously over predefined periods of time each day.

When the composting step is over, the fertilizer product obtained is packaged. Preferably, the packaging step occurs at process temperature, that is, at the temperature set for the composting step.

An example of a biological fertilizer product obtained by means of a method as described above is presented below.

The biological fertilizer product obtained by means of the method as above comprises from 0.50% to 2% in phosphorus, from 0.50% to 2% in potassium, a humidity from 60-70% to 45-55% and a concentration in TOC ranging from 5-10% to 25-30%.

Such a fertilizer product can be used in doses of 1-20 ton/ha depending on the type of crop to be treated.

It is clear that modifications and/or additions of parts or steps may be made to the biological fertilizer product and to the method as described heretofore, without departing from the field and scope of the present invention, as defined by the claims.

In the following claims, the sole purpose of the references in brackets is to facilitate reading and they must not be considered as restrictive factors with regard to the field of protection claimed in the specific claims.

## Claims

1. Biological fertilizer product, **characterized in that** it consists of:
a - composted organic material that comes only from the bovine supply chain,
b - at least one lactobacillus, in particular of the *subtilis* family, and
c - a fungi-based biocontrol agent
which is chosen from trichoderma, mycorrhiza, or a mixture thereof.

2. Method to obtain a biological fertilizer product, **characterized in that** it comprises a step of composting organic material of animal origin that comes only from the bovine supply chain, **and in that** it also comprises a step of adding at least one lactobacillus, in particular of the *subtilis* family, to the organic material during the composting step and, following the step of adding at least one lactobacillus, an additional step of adding at least one fungi-based biocontrol agent which is chosen from trichoderma, mycorrhiza, or a mixture thereof.

3. Method as in claim 2, **characterized in that** the addition of the at least one lactobacillus occurs in a period of time comprised between two and five days from the start of the composting step.

4. Method as in claim 2 or 3, **characterized in that** the additional step of adding the at least one fungi-based biocontrol agent occurs in a period of time comprised between ten and twenty days before the end of the composting step, preferably about fifteen days before the end of the composting step.

5. Method as in any claim 2-4, **characterized in that** the additional step of adding the at least one fungi-based biocontrol agent occurs after at least ten days from the start of the composting step, preferably after about fifteen days from the start of the composting step.

6. Method as in any claim 2-5, **characterized in that** the entire composting step is comprised between twenty and thirty days.

7. Method as in claim 2 or 3, or 6 when it depends on 2 or 3, **characterized in that** the addition of the at least one fungi-based biocontrol agent occurs at the end of the composting step.

8. Method as in any claim 2-5, **characterized in that** the composting step is carried out at a temperature comprised between 50°C and 80°C.

9. Method as in any claim 2-7, **characterized in that** it comprises a step of moving, with a regular time frequency, the decomposing organic material during the composting step, for example on a daily basis.

10. Method as in claim 9, **characterized in that** said moving step comprises moving the decomposing material manually or automatically by means of a movement device comprising a mechanical shovel.
